# EUROPÄISCHE PATENTANMELDUNG

(11) **EP 4 825 609 A1**
(43) Veröffentlichungstag der Anmeldung: **21.10.2026**
(21) Anmeldenummer: 26164484.3
(22) Anmeldetag: 13.03.2026
(51) Int. Cl.: B60C 11/13

(54) **FAHRZEUGREIFEN**

(30) Priorität: 15.04.2025 DE 102025114797
(71) Anmelder: Continental Reifen Deutschland GmbH, 30175 Hannover (DE)
(72) Erfinder: Behr, Ulrich, 30175 Hannover (DE)
(74) Vertreter: Continental Corporation

(57) **Zusammenfassung**

Die Erfindung betrifft einen Fahrzeugreifen (1), umfassend einen Laufstreifen (2) mit durch Profilrillen (3) voneinander getrennten, radial erhabenen Profilelementen (13, 14), wobei jede Profilrille (3) durch einen Rillengrund (5) und zwei Rillenflanken (6, 7) begrenzt ist, die gemeinsam jeweils eine Rilleninnenfläche (8) bilden, wobei zumindest ein Teil der Rilleninnenfläche (8) der Profilrille (3) eine Oberflächenstruktur (9) mit einer Vielzahl von Strukturelementen (10) aufweist, die zur Streuung von Schallwellen in der Profilrille (3) ausgebildet sind, wobei die Strukturelemente (10) pseudorandomisiert angeordnete Vorsprünge (11) und/oder Vertiefungen (12) mit gleicher Grundform und wenigstens teilweise variabler geometrischer Ausführung sind.

## Beschreibung

Die Erfindung betrifft einen Fahrzeugreifen, umfassend einen Laufstreifen mit durch Profilrillen voneinander getrennten, radial erhabenen Profilelementen. Die jeweilige Profilrille ist durch einen Rillengrund und zwei Rillenflanken begrenzt, wobei der Rillengrund und die beiden daran angrenzenden Rillenflanken gemeinsam jeweils eine Rilleninnenfläche bilden. Zumindest ein Teil der Rilleninnenfläche der Profilrille weist eine Oberflächenstruktur mit einer Vielzahl von Strukturelementen auf, die zur Streuung von Schallwellen in der Profilrille ausgebildet sind.

Aus dem Stand der Technik sind Fahrzeugreifen bekannt, die zur Geräuschminderung auf der Reifenlauffläche über spezielle Profilelemente oder Einkerbungen verfügen. Solche Maßnahmen zielen darauf ab, Luftschall zu reduzieren, der durch das Abrollen des Reifens auf der Fahrbahn erzeugt wird. Auch die Gestaltung der Profilrillen wird zur Beeinflussung akustischer Eigenschaften herangezogen. Die bekannten Lösungen führen oft nur zu einer geringen akustischen Verbesserung oder sind stark anwendungsspezifisch.

Die Aufgabe der vorliegenden Erfindung besteht darin, einen Fahrzeugreifen bereitzustellen, bei dem durch eine gezielte Oberflächenstruktur innerhalb der Profilrillen eine verbesserte Reduktion der Schallemissionen erreicht wird, ohne die Nässeperformance zu beeinträchtigen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugreifen umfasst einen Laufstreifen mit durch Profilrillen voneinander getrennten, radial erhabenen Profilelementen, wobei die jeweilige Profilrille durch einen Rillengrund und zwei Rillenflanken begrenzt ist, die gemeinsam jeweils eine Rilleninnenfläche bilden. Zumindest ein Teil der Rilleninnenfläche der Profilrille weist eine Oberflächenstruktur mit einer Vielzahl von Strukturelementen auf, die zur Streuung von Schallwellen in der Profilrille ausgebildet sind. Die Strukturelemente sind pseudorandomisiert angeordnete Vorsprünge und/oder Vertiefungen mit gleicher Grundform und wenigstens teilweise variabler geometrischer Ausführung.

Als Profilrille ist ein in den Laufstreifen des Fahrzeugreifens eingearbeiteter, vertiefter Bereich zu verstehen, der zur Wasserableitung und Verbesserung der Fahrbahnhaftung dient. Sie trennt benachbarte Profilelemente voneinander. Die Rilleninnenfläche der Profilrille umfasst die gesamte innere Oberfläche der Profilrille, also den Rillengrund und die beiden Rillenflanken, die gemeinsam die Begrenzung der Rille bilden. Optional können Übergangsbereiche zwischen Rillengrund und Rillenflanken ebenfalls zur Rilleninnenfläche gezählt werden.

Die Oberflächenstruktur kann flexibel in verschiedenen Bereichen der Rilleninnenfläche angeordnet sein. Sie kann ausschließlich am Rillengrund vorgesehen sein, um eine zentrale Streuwirkung zu erzielen. Alternativ kann sie nur an einer der beiden Rillenflanken oder an beiden Rillenflanken gleichzeitig ausgeführt sein, um eine laterale Schallstreuung zu bewirken. Ebenso ist es möglich, die Struktur sowohl am Rillengrund als auch an nur einer der beiden Rillenflanken oder an beiden Rillenflanken gleichzeitig auszubilden. Dies erlaubt eine gezielte Anpassung an die akustischen und strömungstechnischen Bedingungen in der Profilrille.

Als Oberflächenstruktur ist im Rahmen der Erfindung eine strukturierte Oberflächengestaltung der Rilleninnenfläche zu verstehen. Die Oberflächenstruktur besteht aus geometrischen Strukturelementen, die so ausgebildet sind, dass in der Profilrille eine Streuung von Schallwellen bewirkt wird. Die Strukturelemente sind in Form von Vorsprüngen und/oder Vertiefungen mit definierter Form und Abmessung ausgeführt sein.

Die Strukturelemente können ausschließlich als Vorsprünge, ausschließlich als Vertiefungen oder als Kombination beider Elemente ausgebildet sein. Ein Vorsprung ist ein erhabenes Element, das über die angrenzende Fläche hinausragt, eine Vertiefung liegt unterhalb der angrenzenden Oberfläche. Die Kombination unterschiedlicher Höhenlagen bewirkt eine effektive Streuwirkung.

Die Anordnung der Strukturelemente erfolgt pseudorandomisiert, sodass keine regelmäßigen Wiederholungen entstehen, die zu Resonanzeffekten führen könnten. Dadurch wird eine Schallstreuung erzielt und die Geräuschemission des Fahrzeugreifens reduziert.

Im Sinne der vorliegenden Erfindung bezeichnet der Begriff "pseudorandomisiert" eine Anordnung von Vorsprüngen bzw. Vertiefungen, die nach einem festgelegten, jedoch nicht periodisch wiederholenden Prinzip angeordnet sind. Die Anordnung ist so gewählt, dass sie für das menschliche Auge oder eine einfache geometrische Analyse keine regelmäßige oder symmetrische Struktur erkennen lässt, sondern eine scheinbar zufällige Verteilung aufweist, die jedoch deterministisch erzeugt werden kann, beispielsweise durch computergestützte Verfahren. Ein typisches Beispiel für eine pseudorandomisierte Struktur ist die Anwendung eines MLS-Musters ("Maximum-Length Sequence"), wie es aus der Akustik zur Gestaltung von Diffusoren bekannt ist. Auch andere Verteilungen, wie beispielsweise nach dem Prinzip von QRD-Diffusoren, sind hier denkbar. Solche Anordnungen weisen eine definierte Unregelmäßigkeit auf, die gezielt zur Streuung akustischer Wellen genutzt werden kann.

In diesem Zusammenhang unterscheiden sich pseudorandomisierte Anordnungen von regelmäßig wiederholenden Strukturen, wie sie im Stand der Technik bekannt sind, insbesondere dadurch, dass keine identischen Strukturmuster über ein oder mehrere Perioden hinweg auftreten, wie es bei linear, symmetrisch oder gitterartig angeordneten Strukturen der Fall ist. Der Begriff "pseudorandomisiert" schließt ausdrücklich solche Strukturen aus, bei denen die Strukturelemente in regelmäßigen Abständen oder in wiederholenden Gruppenmustern (z. B. mit symmetrischer oder versetzter Reihenfolge) auftreten. Die pseudorandomisierte Anordnung zielt vielmehr darauf ab, durch die gezielte Unregelmäßigkeit eine Diffusion bzw. Streuung von Schallwellen zu erzeugen, wie sie durch regelmäßig strukturierte Systeme nicht erreichbar ist.

Die Oberflächenstruktur überträgt Konzepte aus der Raumakustik auf die Profilrille und ermöglicht so eine effektive, breitbandige Streuung von Luftschallwellen, ohne die Nässeperformance des Reifens nennenswert zu beeinträchtigen.

Der Ausdruck "mit gleicher Grundform" bezeichnet im Sinne der Erfindung, dass die Strukturelemente hinsichtlich ihrer äußeren Kontur oder ihres Grundrisses - beispielsweise in Draufsicht - eine übereinstimmende geometrische Basisform aufweisen, wie etwa eine quadratische, rechteckige, runde oder streifenförmige Form. Unter "wenigstens teilweise variabler geometrischer Ausführung" wird verstanden, dass sich die Strukturelemente trotz gleicher Grundform in mindestens einem geometrischen Merkmal unterscheiden können, beispielsweise in ihrer Höhe, Breite, Tiefe, Neigung oder Kantenlänge. Beide Begriffe stehen dabei in funktionalem Zusammenhang, denn die gleiche Grundform sorgt einerseits dafür, dass die Strukturelemente grundsätzlich ähnlich aufgebaut sind, während die gezielten Unterschiede in einzelnen Merkmalen - wie Höhe oder Breite - dafür sorgen, dass eine unregelmäßige Oberfläche entsteht, die zur Streuung von Schallwellen beiträgt.

Vorzugsweise weisen die Strukturelemente in der Draufsicht einen rechteckigen, dreieckigen, polygonalen, zylindrischen oder ovalen Querschnitt auf. Dies erlaubt eine effektive Anpassung an unterschiedliche Frequenzspektren. Ein rechteckiger Querschnitt weist vier rechtwinklige Ecken auf. Ein quadratischer Querschnitt ist ein Sonderfall mit gleich langen Seiten. Ein dreieckiger Querschnitt besteht aus drei Seiten mit variabler Winkel- und Seitenlängenverteilung. Ein polygonaler Querschnitt hat mehr als vier Seiten, z. B. als Fünfeck oder Sechseck. Ein zylindrischer Querschnitt ist kreisförmig, ein ovaler Querschnitt weist zwei ungleich lange, rund verlaufende Achsen auf.

Bevorzugt umfasst der Fahrzeugreifen Vorsprünge und/oder Vertiefungen mit im Wesentlichen konstanten Querschnittsabmessungen. Dabei bleibt die Querschnittsform weitgehend gleich, während Höhe oder Tiefe variieren können.

Nach einer besonderen Ausführungsform weist der Fahrzeugreifen Vorsprünge und/oder Vertiefungen mit einer Würfelform auf, die eine Kantenlänge zwischen 0,3 mm und 8 mm, vorzugsweise zwischen 0,4 mm und 5 mm, bevorzugt zwischen 0,5 mm und 4 mm besitzen. Diese Maßverhältnisse sind insbesondere für die akustisch relevanten Frequenzbereiche wirksam. Ein Strukturelement in Würfelform hat sechs gleich große, quadratische Flächen und identische Kantenlängen, also eine kubische Geometrie.

Bevorzugt umfasst der Fahrzeugreifen in Draufsicht betrachtet streifenförmige Vorsprünge und/oder Vertiefungen. Die Streifen können in pseudorandomisierter Breite und Tiefe angeordnet sein. Ein streifenförmiges Strukturelement ist ein langgestreckter, schmaler Vorsprung oder eine Vertiefung, der bzw. die sich in einer Richtung über eine größere Länge erstreckt, zum Beispiel quer oder längs zur Profilrille.

Nach einer besonderen Ausführungsform weist der Fahrzeugreifen pyramidenförmige Vorsprünge und/oder Vertiefungen auf. Ein pyramidenförmiges Strukturelement verjüngt sich spitz nach oben oder unten und besteht meist aus dreieckigen Seitenflächen, die von einer Grundfläche auf eine Spitze zulaufen. Derartige Strukturelemente lenken einfallende Schallwellen mehrfach ab und wirken damit besonders effektiv gegen gerichtete Reflexionen.

Vorteilhaft ist die Profilrille als sich im Wesentlichen in Reifenumfangsrichtung erstreckende Umfangsrille ausgebildet. Der Fahrzeugreifen kann mehrere Umfangsrillen aufweisen, die sich jeweils über die gesamte Reifenumfangsrichtung erstrecken.

Bevorzugt ist die Oberflächenstruktur über die gesamte Länge der Umfangsrille in Reifenumfangsrichtung oder nur in Teilbereichen angeordnet. Dies erlaubt eine gezielte Anpassung an akustisch kritische Zonen.

Ein Teilbereich der Umfangsrille ist ein Abschnitt derselben, der nur einen bestimmten Längenabschnitt umfasst, zum Beispiel ein Viertel oder eine andere begrenzte Länge. Die Oberflächenstruktur kann sich also über einen begrenzten Teil der Länge der Umfangsrille nur am Rillengrund, an einer oder beiden Rillenflanken oder sowohl am Rillengrund als auch an den Rillenflanken erstrecken.

Nach einer besonderen Ausführungsform besteht die Oberflächenstruktur in Erstreckungsrichtung der Profilrille aus mehreren in regelmäßigen Abständen angeordneten Abschnitten. Jeder Abschnitt enthält eine Vielzahl von Strukturelementen zur Streuung von Schallwellen. Die Strukturelemente sind innerhalb eines Abschnitts gleichartig in Form, jedoch variabel in Größe und pseudorandomisiert verteilt. Die Abschnitte können identisch aufgebaut sein und sich z. B. viermal pro Umfang innerhalb einer Rille wiederholen. Dies ermöglicht eine werkzeugtechnisch einfache Umsetzung durch wiederholte Segmente im Reifenformwerkzeug, z. B. bei Fräs-, Laser- oder 3D-Druckverfahren.

Ferner bevorzugt sind die gleichartigen Vorsprünge und/oder Vertiefungen unterschiedlich groß ausgebildet. Das bedeutet, dass bei gleicher Grundform (z. B. Würfel, Streifen, Pyramide) Unterschiede in Höhe, Breite oder Tiefe bestehen. Diese Variation verbessert die Streuwirkung zusätzlich, insbesondere durch Erweiterung des Frequenzbereichs.

Nach einer besonderen Ausführungsform weisen die Vorsprünge und/oder Vertiefungen der Oberflächenstruktur in Bezug auf eine äußere Oberfläche des zugehörigen Profilelements eine geneigte Stirnseite auf. Die geneigte Stirnseite kann im dreidimensionalen Raum geneigt sein und führt zu einer zusätzlichen Richtungsänderung bei der Reflexion von Schallwellen.

Weitere Merkmale, Vorteile und Einzelheiten der Erfindung werden nun anhand der Zeichnungen, die unterschiedliche Ausführungsbeispiele der Erfindung zeigen, näher beschrieben, wobei gleiche oder ähnliche Bauteil mit demselben Bezugszeichen versehen sind. Dabei zeigen
- Fig. 1: eine schematische Perspektivdarstellung einer Umfangsrille eines Fahrzeugreifens mit einer Oberflächenstruktur gemäß einer ersten Ausführungsform,
- Fig. 2: eine stark schematische Darstellung eines Abschnitts der Oberflächenstruktur gemäß einer ersten Ausführungsalternative, und
- Fig. 3: eine schematische Perspektivdarstellung der Umfangsrille mit der Oberflächenstruktur gemäß einer zweiten Ausführungsalternative.

Gemäß der Erfindung ausgeführte Fahrzeugreifen 1 sind Reifen für Kraftfahrzeuge, insbesondere für mehrspurige Kraftfahrzeuge, vorzugsweise PKW-Reifen für Straßenanwendungen.

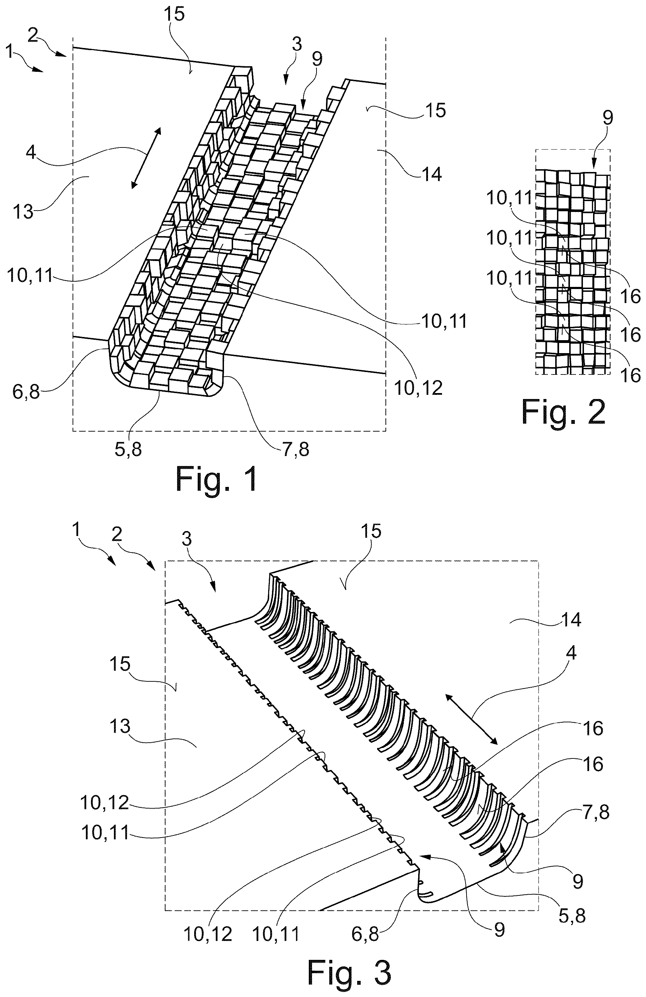

In Figur 1 ist ein Ausschnitt eines Laufstreifens 2 eines exemplarischen Fahrzeugreifens 1 dargestellt. Am Laufstreifen 2 sind mehrere als Umfangsrille ausgebildete Profilrillen 3 angeordnet, die sich in Reifenumfangsrichtung 4 vollumlaufend um den Fahrzeugreifen 1 erstrecken und radial erhabene, blockartige Profilelemente 13, 14 voneinander trennen. Die hier gezeigte Profilrille 3 ist durch einen Rillengrund 5 sowie zwei Rillenflanken 6, 7 begrenzt, die gemeinsam eine Rilleninnenfläche 8 der Profilrille 3 bilden. In diesem Ausführungsbeispiel ist die gesamte Rilleninnenfläche 4 mit einer Oberflächenstruktur 9 versehen.

Die Oberflächenstruktur 9 besteht aus einer Vielzahl von Strukturelementen 10, die in diesem Ausführungsbeispiel als Kombination aus Vorsprüngen 11 und Vertiefungen 12 mit würfelförmiger Grundform ausgebildet sind. Die Strukturelemente 10 weisen im Wesentlichen eine quadratische Grundfläche auf und sind pseudorandomisiert, also nicht sichtbar periodisch wiederkehrend bzw. ohne offensichtliches Widerholmuster, über die gesamte Rilleninnenfläche 8 verteilt. Die Kantenlängen der einzelnen Würfel betragen in diesem Beispiel jeweils zwischen 0,3 mm und 8 mm. Die Anordnung der Strukturelemente 10 erfolgt dabei derart, dass sich keine regelmäßigen Muster oder Wiederholungen ergeben, um gerichtete Reflexionen zu vermeiden und eine Streuung der während des Betriebs in der Profilrille 3 entstehenden Schallwellen zu erzeugen.

Figur 2 zeigt eine erste Ausführungsalternative der Oberflächenstruktur 9. Demnach sind die Strukturelemente 10 als Vorsprünge 11 mit quadratischer Querschnittsform und unterschiedlicher Höhe ausgebildet. Die Vorsprünge 11 weisen jedoch in Bezug auf eine äußere Oberfläche 15 des zugehörigen Profilelements 13, 14 eine geneigte Stirnseite 16 auf. Die Neigung kann bei der Reflexion einfallender Schallwellen eine Richtungsänderung bewirken, wodurch eine verbesserte, mehrdimensionale Streuung des Schalls innerhalb der Profilrille 3 erreicht werden kann. Die Anordnung der Strukturelemente 10 erfolgt auch hier pseudorandomisiert.

In Figur 3 ist eine weitere Ausführungsalternative dargestellt. Die Oberflächenstruktur 9 ist in diesem Beispiel als streifenförmige Anordnung an den beiden gegenüberliegenden Rillenflanken 6, 7 ausgeführt. Die Strukturelemente 10 bestehen aus abwechselnd angeordneten Vorsprüngen 11 und Vertiefungen 12, die quer zur Rillenlängsachse verlaufen. Die Anordnung erfolgt auch hier pseudorandomisiert, um eine gezielte Streuung der Schallwellen zu erreichen. Die Strukturelemente 10 variieren hier scheinbar ohne System in ihrer Breite. Die Anordnung der Strukturelemente 10 kann symmetrisch oder asymmetrisch zur Rillenlängsachse erfolgen. Denkbar ist auch, dass die Strukturelemente 10 der ersten Rillenflanke 6 pseudorandomisiert angeordnet sind, während die Strukturelemente 10 der zweiten Rillenflanke 7 ebenfalls pseudorandomisiert, jedoch unterschiedlich zur ersten Rillenflanke 6, angeordnet sind. Mithin können die Strukturelemente 10 der Oberflächenstruktur 9 in Bezug auf eine Mittelachse der Profilrille 3 asymmetrisch pseudorandomisiert angeordnet sein.

Die Strukturelemente 10 enden jeweils im Übergang zwischen der jeweiligen Rillenflanke 6, 7 und dem Rillengrund 5. Der Rillengrund 5 bleibt in diesem Ausführungsbeispiel frei von Strukturelementen 10. Im Querschnitt betrachtet sind die Strukturelemente 10 rechteckig ausgebildet. Die Darstellung zeigt exemplarisch, wie die Oberflächenstruktur 9 nur in einem Teilbereich der Profilrille 3 vorliegen kann, ohne dass sich regelmäßige Muster wiederholen.

Ferner ist es möglich, dass die Vorsprünge 11 und Vertiefungen 12 eine zur Flankenoberfläche geneigte Stirnseite 16 aufweisen. Die Neigung kann gleichgerichtet oder wechselseitig ausgeführt sein. Auch eine Variation der Höhe der Streifen ist möglich. In dem gezeigten Beispiel nach Figur 3 sind die Stirnseiten 16 im Wesentlichen parallel zur Oberfläche der normalen Rillenflanken 6, 7 ausgerichtet.

In allen Ausführungen kann die Oberflächenstruktur 9 über die gesamte Länge der Profilrille 3 bzw. Umfangsrille oder nur abschnittsweise vorgesehen sein. Die Struktur kann dabei in mehreren, in regelmäßigen Abständen angeordneten Abschnitten vorliegen, zum Beispiel viermal pro Rillenumfang. Diese Abschnitte können gleich oder unterschiedlich ausgestaltet sein. Ferner ist denkbar, wenigstens einen Teil der Strukturelemente 10 jeweils mit einer pyramidenförmigen Struktur auszubilden.

Die Oberflächenstruktur 9 kann ausschließlich am Rillengrund 5, nur an einer der beiden Rillenflanken 6 oder 7, an beiden Rillenflanken wie in Figur 3 oder in Kombination am Rillengrund 5 und an einer oder beiden Rillenflanken gemäß Figur 1 angeordnet sein. Dadurch lässt sich die Streuwirkung an die akustischen Bedingungen in der Profilrille 3 anpassen.

Die Strukturelemente 10 können nur als Vorsprünge 11, nur als Vertiefungen 12 oder als Kombination aus beiden ausgeführt sein. Im Betrieb führt die Oberflächenstruktur 9 dazu, dass in der Profilrille 3 entstehende Schallwellen mehrfach reflektiert, gestreut und abgeschwächt werden, bevor sie aus der Profilrille 3 austreten. Die Kombination unterschiedlicher Geometrien, Höhen und Anordnungen erzeugt eine weitgehend richtungsunabhängige Schallstreuung. Dadurch wird die Lärmemission des Fahrzeugreifens 1 im Bereich der Umfangsrillen deutlich reduziert, ohne die Wasserableitung oder das Aquaplaning-Verhalten nennenswert zu beeinträchtigen.

### Bezugszeichenliste

- 1: Fahrzeugreifen
- 2: Laufstreifen
- 3: Profilrille
- 4: Reifenumfangsrichtung
- 5: Rillengrund
- 6: Rillenflanke
- 7: Rillenflanke
- 8: Rilleninnenfläche
- 9: Oberflächenstruktur
- 10: Strukturelement
- 11: Vorsprung
- 12: Vertiefung
- 13: Profilelement
- 14: Profilelement
- 15: Radial äußere Oberfläche
- 16: Stirnseite

## Patentansprüche

1. Fahrzeugreifen (1), umfassend einen Laufstreifen (2) mit durch Profilrillen (3) voneinander getrennten, radial erhabenen Profilelementen (13, 14), wobei jede Profilrille (3) durch einen Rillengrund (5) und zwei Rillenflanken (6, 7) begrenzt ist, die gemeinsam jeweils eine Rilleninnenfläche (8) bilden, wobei zumindest ein Teil der Rilleninnenfläche (8) der Profilrille (3) eine Oberflächenstruktur (9) mit einer Vielzahl von Strukturelementen (10) aufweist, die zur Streuung von Schallwellen in der Profilrille (3) ausgebildet sind, **dadurch gekennzeichnet, dass** die Strukturelemente (10) pseudorandomisiert angeordnete Vorsprünge (11) und/oder Vertiefungen (12) mit gleicher Grundform und wenigstens teilweise variabler geometrischer Ausführung sind.

2. Fahrzeugreifen (1) nach Anspruch 1, **dadurch gekennzeichnet, dass** die Vorsprünge (11) und/oder die Vertiefungen (12) in der Draufsicht einen rechteckigen, dreieckigen, polygonalen, zylindrischen oder ovalen Querschnitt aufweisen.

3. Fahrzeugreifen (1) nach Anspruch 2, **dadurch gekennzeichnet, dass** die Vorsprünge (11) und/oder die Vertiefungen (12) jeweils im Wesentlichen konstante Querschnittsabmessungen aufweisen.

4. Fahrzeugreifen (1) nach Anspruch 2 oder Anspruch 3, **dadurch gekennzeichnet, dass** die Vorsprünge (11) und/oder die Vertiefungen (12) eine Würfelform mit einer Kantenlänge jeweils zwischen 0,3 mm und 8 mm aufweisen.

5. Fahrzeugreifen (1) nach Anspruch 1, **dadurch gekennzeichnet, dass** die Vorsprünge (11) und/oder die Vertiefungen (12) in der Draufsicht streifenförmig ausgebildet sind.

6. Fahrzeugreifen (1) nach einem der vorhergehenden Ansprüche, **dadurch gekennzeichnet, dass** die Profilrille (3) als sich im Wesentlichen in Reifenumfangsrichtung (4) erstreckende Umfangsrille ausgebildet ist.

7. Fahrzeugreifen (1) nach Anspruch 6, **dadurch gekennzeichnet, dass** die Oberflächenstruktur (9) über die gesamte Länge der Umfangsrille in Reifenumfangsrichtung (4) angeordnet ist.

8. Fahrzeugreifen (1) nach Anspruch 6 oder Anspruch 7, **dadurch gekennzeichnet, dass** die Oberflächenstruktur (9) in Erstreckungsrichtung der Profilrille (3) aus mehreren, in regelmäßigen Abständen angeordneten Abschnitten besteht, wobei jeder Abschnitt eine Vielzahl von Strukturelementen zur Streuung von in der Profilrille (3) entstehenden Schallwellen aufweist, und wobei die Strukturelemente innerhalb jedes Abschnitts pseudorandomisiert angeordnete Vorsprünge (11) und/oder Vertiefungen (12) mit gleicher Grundform und variabler geometrischer Ausführung sind.

9. Fahrzeugreifen (1) nach Anspruch 8, **dadurch gekennzeichnet, dass** die Abschnitte im Wesentlichen identisch ausgebildet sind.

10. Fahrzeugreifen (1) nach einem der vorhergehenden Ansprüche, **dadurch gekennzeichnet, dass** die gleichartigen Vorsprünge (11) und/oder die Vertiefungen (12) unterschiedlich groß ausgebildet sind.

11. Fahrzeugreifen (1) nach einem der vorhergehenden Ansprüche, **dadurch gekennzeichnet, dass** die Oberflächenstruktur (9) sowohl am Rillengrund (5) als auch den Rillenflanken (6, 7) der Profilrille (3) angeordnet ist.

12. Fahrzeugreifen (1) nach einem der vorhergehenden Ansprüche, **dadurch gekennzeichnet, dass** die Vorsprünge (11) und/oder die Vertiefungen (12) der Oberflächenstruktur (9) in Bezug auf eine äußere Oberfläche (15) des zugehörigen Profilelements (13, 14) eine geneigte Stirnseite (16) aufweisen.
